# EUROPEAN PATENT SPECIFICATION

(11) **EP 4 522 997 B1**
(45) Date of publication and mention of the grant of the patent: **19.11.2025**
(21) Application number: 23726024.5
(22) Date of filing: 10.05.2023
(51) Int. Cl.: G01N 35/00

(54) **METHOD FOR OPERATING A SORTER DEVICE IN AN IVD LABORATORY SYSTEM AND IVD LABORATORY SYSTEM**
VERFAHREN ZUM BETREIBEN EINER SORTIERVORRICHTUNG IN EINEM IVD-LABORSYSTEM UND IVD-LABORSYSTEM
PROCÉDÉ DE FONCTIONNEMENT D'UN DISPOSITIF DE TRIEUR DANS UN SYSTÈME DE LABORATOIRE IVD ET SYSTÈME DE LABORATOIRE IVD

(30) Priority: 12.05.2022 EP 22172905
(43) Date of publication of application: 19.03.2025
(73) Proprietor: F. Hoffmann-La Roche AG, 4070 Basel (CH); Roche Diagnostics GmbH, 68305 Mannheim (DE)
(72) Inventor: LAMBAEK, Ole, 6343 Rotkreuz (CH); SCHESNY, Andreas, 71636 Ludwigsburg (DE)
(74) Representative: Bittner, Thomas L.
(86) International application number: PCT/EP2023/062343
(87) International publication number: WO 2023/217815

(56) References cited:
- WO-A1-2014/062785
- US-A1- 2021 239 724
- US-B2- 9 753 048

## Description

The present disclosure refers to a method for operating a sorter device in an IVD laboratory system and an IVD laboratory system.

### Background

In-vitro-diagnostics (IVD) laboratory systems are applied to test / analyze, in particular essentially automatically, samples such as blood or tissue samples that have been taken from the human body, e.g., samples of a bodily fluid. In-vitro-diagnostics can detect diseases or other conditions and can be used to monitor a person's overall health to help cure, treat, or prevent diseases. IVD laboratory systems also may be applied in precision medicine to identify patients who are likely to benefit from specific treatments or therapies. In-vitro-diagnostics tests conducted by the IVD laboratory system are typically used in laboratory or other health professional settings.

Such IVD laboratory systems can comprise a plurality of IVD instruments. An IVD instrument can be provided with a plurality of IVD components or (e.g. device or instrument) modules. An IVD instrument can be, for example, a pre-analytical, an analytical, and / or a post-analytical IVD instrument. In an IVD laboratory system, the Sample container typically are moved along a line of processing for processing. For example, the IVD samples containers may be moved or relocated from a first IVD instrument to a second IVD instrument provided in the line of processing in the IVD laboratory system. The IVD instruments may provide for an IVD working station or location.

Document US 9,753,048 B2 refers to a sample test automation system. In the sample test automation system, a sample tray on which a plurality of samples can be installed is prepared, an identifier for distinguishing the sample tray is attached to the sample tray, a sample introducing unit is provided with an identifier reading apparatus which reads the identifier of the sample tray, and information about the samples is switched based on the read identifier of the sample tray.

Document US 2014 / 0294699 A1 discloses a specimen transfer device, where a specimen can be transferred between carriers purposed for different kinds of conveyance. A plurality of trays that can retain specimen carriers of a transfer destination is provided, and these trays can be freely grouped.

Document US 6,255,614 B1 refers to an apparatus comprising a specimen-container transfer apparatus having: a conveyor unit for transporting specimen-container racks; a specimen-container ID reader for reading the specimen-container identification numbers of the specimen container racks transported by the conveyor unit; a specimen-container housing-rack table for setting up specimen-container housing racks for housing specimen containers; a specimen-container transfer mechanism for taking specimen containers out of a specimen-container rack and putting them in a specimen-container housing rack; and a control unit for controlling the order in which the specimen containers are put into the specimen-container housing rack.

Document WO 2014 / 062785 A1 refers to determining different fill levels of objects in containers for disposable and consumable objects. A sensor unit detects the presence and levels of objects in waste and consumable containers. When a waste container is full or a consumable container is empty, a notification message is generated to prompt emptying, refilling, or replacing the container. Notifications can also be generated when the contents reach a predetermined level.

### Summary

It is an objective of the present disclosure to provide improved method for operating a sorter device in an IVD laboratory system and an IVD laboratory system which reduce the risk for interruption of the operation of the IVD laboratory system.

For solving the problem, a method for operating a sorter device in an IVD laboratory system according to claim 1 is provided. Further, an IVD laboratory according to claim 14 is provided. Further embodiments are disclosed in dependent claims.

The sorter device may provide for storage of a plurality of sample containers which, for example, are to be processed by one of the IVD instruments of the IVD laboratory system or which are processed for sorting out or long time storage. There may be one or more sorter devices provided in the IVD laboratory system. In case of a plurality of sorter devices provided in the IVD laboratory system, the sorter devices may be placed in different locations of the IVD laboratory system. For example, a sorter device may be provided for introducing sample containers into a workflow of the IVD laboratory system. Similarly, the sorter device may function for storage of sample containers leaving some workflow in the IVD laboratory system.

During operation of the sorter device it is checked whether the number of sample containers presently received in the first sample container rack is lower than or at least equal to the first threshold value. For example, the first threshold value may be indicative of a value between 70% and 90% of the maximum number of sample containers which can be received in the first sample container rack. Thus, prior to the present number of sample containers received in the first sample container rack getting close to or even reaching the maximum number of sample containers which can be received in the reception holes of the first sample container rack, the warning data (warning information, warning signal) is output through the output device, thereby, informing an operator of the IVD laboratory system about the first sample container rack being potentially completely filled with sample containers in the near future. In response, the operator can initiate necessary steps or measures for avoiding complete filling of the first sample container rack. Such complete filling, i.e. all reception holes of the first sample container rack have received a sample container, may interrupt further operation or workflow of the IVD laboratory system.

The first threshold value is set in the pre-operating process taking place prior to actual operation of the sorter device, such operation being part of operating the IVD laboratory system. The pre-operation process can be conducted, for example, in a design process at the time of setting up the IVD laboratory system. Also, the pre-operation process can be conducted when the IVD laboratory system is re-started after some non-operating time.

The method may further comprise assigning to the second sample container rack a second threshold value indicative of a second threshold number of sample containers in the second sample container rack, wherein the second threshold number of sample containers is smaller than a maximum number of sample containers receivable in the second sample container rack, and the second threshold value is different from the first threshold value. The operating of the sorter device in the operation process may further comprise the following: placing sample containers in the reception holes of the second sample container rack by the handling device, determining a second present number of sample containers received in the second sample container rack by the sorter device controller, comparing the second present number of sample containers to the second threshold value by the sorter device controller, and if the second present number of sample containers is equal to or greater than the second threshold value, outputting a second warning data through the output device. A threshold value indicative of an individual threshold number of sample containers receivable in some sample container rack from the plurality of sample container racks can be set or configured for one or more of the sample container racks. The threshold value may be set independently for each of the sample container racks. In operation of the sorter device (of the IVD laboratory system), the present number of sample containers received in the sample container racks which have been assigned a threshold value will be determined and compared to the threshold value set before.

For one or more of the sample container racks the determining of the present number of sample containers received in the sample container rack may be determined several times during operation of the IVD laboratory system. For example, such determining of the present number of sample containers received in the sample container rack may be triggered by some specific event and / or regularly after some pre-determined time has lapsed. For example, the determining of the present number of sample containers may be determined every minute. The first and / or second present number of sample containers received in the first / second sample container rack may be continuously determined while the IVD laboratory system is running or operated.

The method may be provided with at least one of the following: assigning the plurality of sample container racks to the plurality of processing sub-targets in response to rack assignment user input received in at least one of the sorter device controller and the system operation controller of the IVD laboratory system; and assigning the first sample container rack the first threshold value in response to first threshold value user input received in at least one of the sorter device controller and the system operation controller of the IVD laboratory system. The rack assignment user input is indicative of the assignment between at least one sample container rack and a processing sub-target to be assigned to the at least one sample container rack. User input may be received through a user interface which, for example, allows the user to select among a plurality of processing-sub-targets which are conducted in the operation of the IVD laboratory system. For user selection, a menu may be displayed on a display device of the user interface which allows the user to select the processing sub-target to be assigned to some sample container rack.

The processing sub-targets, in the different embodiments, may comprise one or more of the following processing sub-targets: Transporting a sample container between IVD instruments, providing a sample container to a refrigerator, providing a sample container to a workflow within the IVD laboratory system, providing a sample container to an IVD analyzer, sorting out a sample container, and providing a sample container to a storage place outside the IVD laboratory system. Sample containers which are to be processed according to one and the same processing sub-target can be provided to a sample container rack assigned such processing sub-target in the sorter device.

In the operation process, the following may be provided: the first threshold value is updated by an amended first threshold value indicative of an amended first threshold number of sample containers, the amended first threshold value being different from the first threshold value, comparing the first present number of sample containers to the amended first threshold value by the sorter device controller, and if the first present number of sample containers is equal to or greater than the amended first threshold value, outputting the first warning data through the output device. According to such example, the first threshold value originally set or configured can be amended during operation of the IVD laboratory system. The first threshold value may be dynamically be amended or updated, thereby, adjusting the first threshold value in case of need. The amended first threshold value may be received by user input.

The second threshold value may be updated by an amended second threshold value in response to updating the first threshold value. For example, if the second sample container rack is to be filled with sample containers after the first sample container rack is completely filled, the first and second threshold values may be linked, thereby, causing the second threshold value being updated, if the first threshold value is assigned the amended first threshold value because of updating.

The method may further comprise, in the operation process: determining an operation parameter indicative of at least one of a present operation characteristic of the sorter device and a present operation characteristic of the IVD laboratory system such as a present operation characteristic of an IVD device provided in the IVD laboratory system; and determining the amended first threshold value in dependence on the operation parameter. The updating of the first threshold value by the amended first threshold value is conducted in dependence on the operation parameter, thereby, adapting the first threshold value in dependence on actual operation of the IVD laboratory system. For example, if it is determined that the IVD laboratory system is switched from a first mode of operation to a second mode of operation, in response updating of the first threshold value by the amended first threshold value may be performed. The first and second mode of operation, for example, may refer to the IVD laboratory system performing different workflow design.

The operation parameter is indicative of at least one operation characteristic selected from the following: sample container throughput of the sorter device, sample container throughput of the IVD laboratory system, sample container throughput of at least one IVD device, sample container throughput of the first processing sub-target, and sample container throughput of the handling device. Throughput of sample containers refers to a number of sample containers processed or handled within a time period such as the number of sample containers processed or handled within five minutes or an hour. Different throughput values may be determined based on different time periods applied for determining the throughput value. For example, switching between the first and second mode of operation for the IVD laboratory system may cause having different throughput determination applied which in turn may cause updating of the first and / or some other threshold value.

The first threshold value may be updated in response to the outputting of the first warning data through the output device. In this example, the updating of the first threshold value by the amended first threshold value is conducted in response to determining the outputting of the first warning data. For example, in view of a present throughput value the first threshold value may be increased, thereby, allowing a higher number of sample containers to be received in the first sample container rack prior to outputting the warning data. Such measure may be conducted, for example, if the throughput value is considered to be rather low. This will allow to increase the first threshold value to higher level.

For example, the throughput may be high due to a handling device or a fast operating gripper, or due to the operation system being supplemented with additional handling devices or grippers. In this case, the maximum number of sample containers might be reached faster than usual. In order to allow operators to react in time after a threshold is exceeded and before the maximum number of sample containers is reached, the threshold can be set to a lower value. For example, sample container throughput of the sorter device, of the IVD laboratory system, of any IVD instruments, of the first processing sub-target, and/or of the handling device can be monitored constantly and monitored data be maintained in one or more operation parameters. If one or more of these operation parameters exceed an average value of the operation parameter or parameters by a predefined amount, the threshold is set to a lower value. The threshold is decremented by a predefined amount. This process may repeat and lead to multiple decrementations of the threshold.

As another example, the throughput may be low due to maintenance or due to problems with driving motors or due to general low performance or lack of sample containers in the operation system. In this case, the maximum number of sample containers might be reached slower than usual. In order to avoid unnecessary interaction on behalf of the operators, the threshold can be set to a higher value. Similar to the aforementioned example, the sample container throughput can be monitored. If an operation parameter falls behind an average value of the operation parameter or parameters by a predefined amount, the threshold can be set to a higher value. For example, the threshold can be incremented by a predefined amount. The incremented amount may be equal to the decremented amount in the previous example.

The method may further comprise, in the operation process: assigning to the first sample container rack an amended first processing sub-target which is different from the first updated processing sub-target; and updating the first threshold value in response to the assignment of the amended first processing sub-target to the first sample container rack. In this example, the first threshold value is amended or updated, since a new or different processing sub-target is assigned to the first sample container rack. The new or different processing sub-target may imply different needs on the first sample container rack which causes amendment or updating of the first threshold value.

In the pre-operation process, the method may further comprise: generating sorter device configuration data indicative of the assignment of the plurality of sample container racks to the plurality of processing sub-targets, and the assignment of the first threshold value to the first sample container rack; storing the sorter device configuration data in a storage device assigned to the IVD laboratory system; retrieving the sorter device configuration data from storage device; providing the sorter device configuration data to the sorter device; and configuring the sorter device according to the sorter device configuration data. The sorter device configuration data are stored, and, thereby, are made available for some additional or later configuration of the sorter device. For example, the sorter device configuration data may be generated and stored at an early stage of generating a design or layout of the IVD laboratory system. Later, when the IVD laboratory system is actually operated for sample handling and processing, the sorter device configuration data may be received and applied for configuration of the sorter device.

The sorter device configuration data may be retrieved from the storage device in response to receiving a starting request for starting operation of the sorter device in at least one of the system operation controller and the sorter device controller. In response to a starting request received for starting operation of the sorter device, for example in response to user input, the sorter device configuration data are provided for configuring the sorter device. Such configuration may be conducted at any time when the IVD laboratory system is (re-)started.

The configuring of the sorter device in the pre-operation process may be at least in part performed by a sorter device layout module functionally connectable to at least one of the system operation controller and the sorter device controller. The sorter device layout module may be provided by a software module running on one or more processors and will be configured to generate the sorter device configuration data which are applied for configuration of the sorter device. The sorter device layout module may connect to the system operation controller of the IVD laboratory system which in turn may provide the sorter device configuration data to the sorter device, such as the sorter device controller. Alternatively, the sorter device layout module may directly connect to the sorter device controller.

The sorter device layout module may be provided as a sub-module of the system operation controller.

The method may further comprise assigning the first threshold value to a subset of the reception holes of the first sample container rack, wherein the first threshold value is indicative of a first threshold number of sample containers in the first sample container rack, and the first threshold number of sample containers is smaller than a maximum number of sample containers receivable in the subset of reception holes of the first sample container rack. In this example the first threshold value is assigned to a subset of the reception holes of the first sample container rack, but not to the first sample container rack as whole. A further subset of reception holes of the first sample container rack may have assigned a different threshold value. The different subsets of reception holes of the first sample container rack may be assigned to different processing sub-targets. In operation, the filling level (number of sample containers presently received) is determined for the subsets of reception holes independently. The warning data can be generated, in case of need, for the subsets of the reception holes independently.

The method may still further comprise providing the plurality of sample container racks disposed on a plurality of trays each configured to receive one or more sample container racks from the plurality of sample container racks. In example, similarly to the threshold value assigned to a sample container rack a tray carrying one or more sample container racks may be assign a threshold value indicative of a threshold number of sample containers for receiving sample containers in the one or more sample container racks located in the tray, wherein the threshold value is smaller than the maximum number of sample containers receivable in the tray. With respect to generating and outputting warning data, processing and handling of such threshold value assigned to the tray can be conducted as it has been described for the threshold value assigned to the sample container rack.

The IVD laboratory system is provided with a plurality of sample containers which may also be referred to as IVD sample container configured to receive one or more samples to be processed in the IVD laboratory system. The sample container may be a tube. The sample container(s) may be received in a sample container rack or puck providing for an sample container holder or carrier. Sample container holder or carrier is configured to receive one or more sample containers. The sample containers may be configured to receive one or more samples to be processed in the laboratory system. A sample container may be handled or processed by only a subset of the IVD instruments or a single IVD instrument of the IVD laboratory system.

In the sorter device sample containers can be picked from and placed in the reception holes of the sample container rack.

A biological sample received in a sample container can comprise a biological material, e.g. as taken from a human body or an animal body. A biological sample can comprise a body fluid, such as blood, interstitial fluid, urine, saliva, or other types of body fluids. For simplicity, biologicals samples are herein typically only referred to as "samples".

A sample can potentially comprise at least one analyte of interest, e.g. molecules, ions, proteins, metabolites, pathogens, and the like. It is typically one of the tasks of IVD testing to de-tect the presence resp. absence and/or a concentration of one or more analytes in a sample. More generically, IVD testing can refer to determining a biological property of a sample. IVD testing can comprise performing at least one analytical test on a sample, wherein the analytical test can allow to draw conclusions on the biological properties of the sample. The analytical test can e.g. comprise adding a reagent to the sample, a possible detectable reaction of the sample with the reagent, and / or a detecting or non-detection of this reaction. Detecting of an reaction can e.g. comprise measuring a physical value of the sample (resp. a composite obtained by using the sample such as a sample-reagent mixture), such as a spectrum and / or an intensity of a radiation reflected by and/or transmitted through the sample (resp. the composite obtained by using the sample).

Processing a sample in the IVD laboratory system can e.g. comprise transporting the sample (typically in sample containers such as tubes; the sample containers may be held in sample container holders such as tube racks), performing pre-analytical steps on the samples (e.g. preparatory steps such as centrifuging), performing analytical steps on the samples (e.g. adding a reagent to the sample and measuring the reaction of the sample with the reagent), and / or performing post-analytical steps on the samples (e.g. storing of a sample in a refrigerator for later use).

An IVD laboratory instrumentation or the IVD laboratory system comprises one or more IVD (laboratory) instruments designed for processing samples, e.g. for performing one or more steps of an intended workflow on the sample. Processing a sample can comprise one or more physical processing steps (e.g. moving, mixing, heating, etc.). An IVD instrument can comprise instrument hardware for processing samples (e.g. gripper, reagent storage, pipetting apparatus, heating element, etc.) as well as instrument software designed for operating the instrument hardware. An IVD laboratory instrument can comprise a control unit designed for controlling, in particular steering, the operation of the instrument hardware, wherein the instrument software can be designed for being executed using the control unit.

The IVD laboratory instruments are typically categorized according to the different type of sample processing steps they can perform. A transport IVD laboratory instrument is designed for transporting samples (resp. the Sample container and / or respective sample container holders), e.g. from one IVD laboratory instrument to another. A pre-analytical IVD laboratory instruments is designed for performing pre-analytical steps on the samples. A analytical IVD laboratory instrument is designed for performing analytical steps (such as an analytical test) on the samples; an analytical IVD laboratory instrument can comprise a digital analytical IVD laboratory instrument designed for performing analytical computation steps (e.g. a medical algorithm). A post-analytical IVD laboratory instrument is designed for performing post-analytical steps on the samples. Some IVD laboratory instruments are capable of performing multiple type of sample processing steps, e.g. pre-analytical and analytical steps.

In an example, the IVD laboratory instrumentation comprises two pre-analytical IVD laboratory instruments, five analytical IVD laboratory instruments, one post-analytical IVD laboratory instruments, and one transport IVD laboratory instruments, wherein the IVD laboratory instrumentation is designed such that the one transport IVD laboratory instruments connects all the other IVD laboratory instruments.

The IVD laboratory system may comprise a transport system configured to transport the sample containers in the IVD laboratory system. The transport system may be configured to transport the Sample container along the sample container flow. The transport may be fully or substantially automated. The transport system may be supported by user interactions. At least along a section of the Sample container flow, the user can transport the Sample container. This user transport can be a routine activity.

### Description of further embodiments

In the following, embodiments, by way of example, are described with reference to figures. In the figures show:
- Fig. 1: a schematic representation of elements or components of an IVD laboratory system;
- Fig. 2: a schematic representation of a sorter device provided in the IVD laboratory system; and
- Fig. 3: a schematic representation of a method for operating the sorter device in the IVD laboratory system.

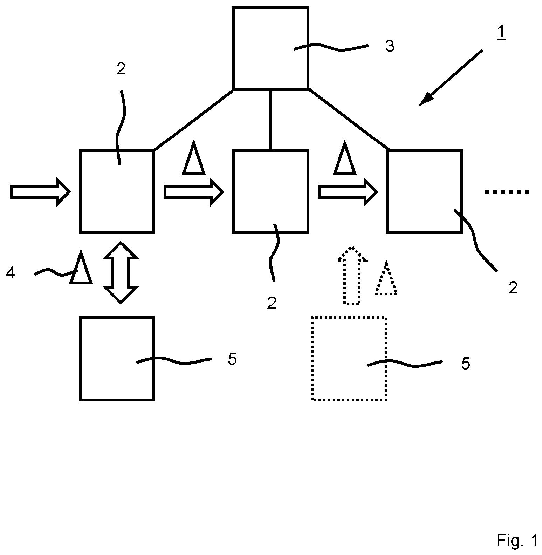

Fig. 1 shows a schematic representation of elements or components of an IVD laboratory system 1 comprising a plurality of IVD instruments 2 to provide a workflow for samples to be analyzed and received a sample containers. An operation system controller 3 is provided which is configured to control and manage operation of the plurality of IVD instruments 2 for conducting at least one of pre-analysis, analysis, and post-analysis of samples such as blood or tissue samples that have been taken from the human body, e.g., samples of a bodily fluid.

Sample containers 4 receiving a sample to be analyzed in the IVD laboratory system 1 can be received and stored in a sorter device 5 which can connect to the workflow between the IVD instruments 2 at any place along the workflow. For example, sample containers 4 can be received in the sorter device 5 from the workflow. Similarly, sample containers 4 may be provided from the sorter device 5 to the workflow established between the IVD instruments 2. One or more sorter devices 5 may be provided with the IVD laboratory system 1.

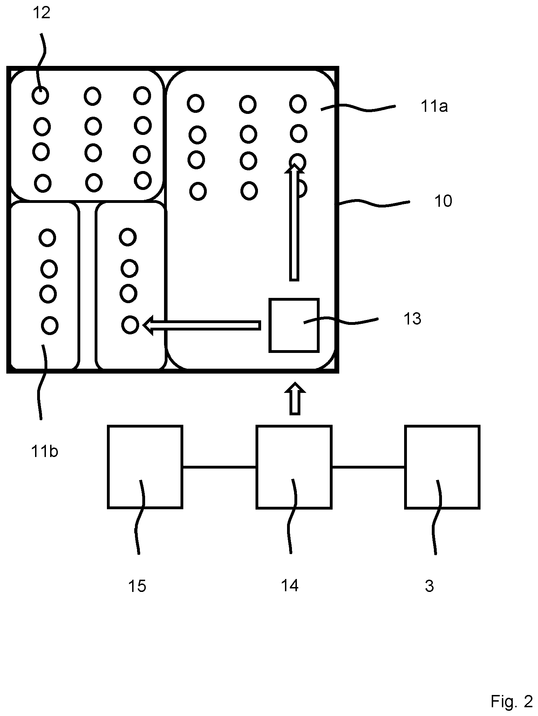

Fig. 2 shows a schematic representation of the sorter device 5 provided with a tray 10 which is carrying a plurality of sample container racks 11a, 11b each of which is provided with a plurality of reception holes 12 configured to receive one of the sample containers 5 which is to be processed by the IVD instruments 2 or which has been processed by the IVD instruments 2.

The sorter device 5, according to Fig. 2, is provided with a handling device 13 which is configured to place sample containers within the reception holes 12 of the sample container racks 11a, 11b, and to pick up sample containers 4 from the reception holes 12. For conducting such operation for pick and place, the handling device 13 is movable across the arrangement of sample container racks 11a, 11b received on the tray 10.

Operation of the sorter device 5 is controlled by a sorter device controller 14 connectable to the operation system controller 3. According to Fig. 2, the sorter device controller 14 is connected to a user interface 15 which is configured to output output data (such as audio and / or video data) and receive user input from an operator of the IVD laboratory system 1.

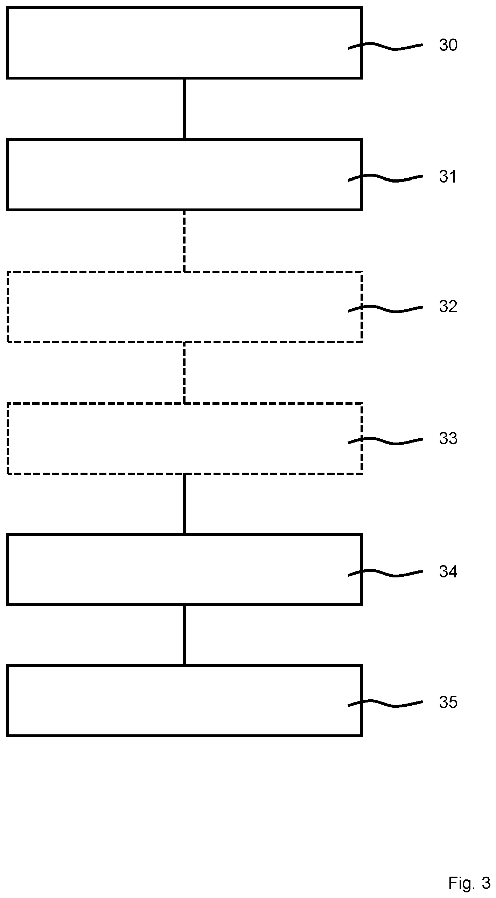

Following, with respect to the schematic representation in Fig. 3, a method for operating the sorter device 5 in the IVD laboratory system 1 is described. In a pre-operation process configuration of the sorter device 5 is conducted, comprising assigning the plurality of sample container racks 11a, 11b to a plurality of processing sub-targets conducted by the IVD laboratory system 1 in operation (step 30). A plurality of different processing sub-targets may be conducted when the IVD laboratory system 1 is operated.

Each of the plurality of sample container racks 11a, 11b is assigned one of the processing sub-targets. A first sample container rack 11a is assigned a first processing sub-target. A second sample container rack 11b is assigned a second processing sub-target which is different from the first processing sub-target. Based on such assignment, the different sample container racks 11a, 11b will receive sample containers 4 for storage, by means of the handling device 13, which are to be processed according to the processing sub-target assigned to the respective sample container rack 11a, 11b. Thus, the sample container rack 11a or 11b and the sample containers 4 received in the reception holes 12 of such sample container rack 11a or 11b are assigned the same processing sub-target in this example.

The handling device 13 movable across the area of the tray 10 receiving the sample container racks 11a, 11b is configured to pick and place the sample containers 4.

Processing a sample in the IVD laboratory system 1 (e.g. providing for a processing sub-target) can e.g. comprise transporting the sample (provided in the sample containers 4 such as tubes), performing pre-analytical steps on the samples (e.g. preparatory steps such as centrifuging), performing analytical steps on the samples (e.g. adding a reagent to the sample and measuring the reaction of the sample with the reagent), and / or performing post-analytical steps on the samples (e.g. storing of a sample in a refrigerator for later use).

The IVD instruments 2 are designed for processing samples, e.g. for performing one or more steps of an intended work-flow on the sample. Processing a sample can comprise one or more physical processing steps (e.g. moving, mixing, heating, etc.). An IVD instrument 2 can comprise instrument hardware for processing samples (e.g. gripper, reagent storage, pipetting apparatus, heating element, etc.) as well as instrument software designed for operating the instrument hardware. The IVD instrument 2 can comprise a control unit designed for controlling, in particular steering, the operation of the instrument hardware, wherein the instrument software can be designed for being executed using the control unit.

Further, according to step 31, the first sample container rack 11a is assigned a first threshold value indicative of a first threshold number of sample containers 4 to be received in the first sample container rack 11a. Such first threshold number of sample containers 4 is smaller than a maximum number of sample containers 4 which can be received in the first sample container rack 11a. For example, the first threshold number may correspond to 70%, 80% or 90% of the maximum number of sample containers 4 receivable in the reception holes 12 of the first sample container rack 11a.

Optionally, in step 32, sorter device configuration data may be generated which are indicative of both the assignment of the plurality of sample container racks 11a, 11b to the plurality of processing sub-targets and the assignment of the first threshold value to the first sample container rack 11a. Such sorter device configuration data may be stored in a storage device (not shown) assigned to the IVD laboratory system 1. If the sorter device configuration data are generated and stored, in step 33, the sorter device configuration data may optionally be retrieved from the storage device and provided for configuration of the sorter device 5. For example, the sorter device configuration data may be generated and stored at an early stage of generating a design or layout of the IVD laboratory system 1. Later, when the IVD laboratory system 1 is actually operated for sample handling and processing, the sorter device configuration data may be received and applied for configuration of the sorter device 5.

In an operation process for operating the sorter device 5 (while operating or running the IVD laboratory system 1), sample containers 5 are placed in the reception holes 12 of the first sample container rack 11a by the handling device 13. During such operation one or more times a first present number of sample containers 4 presently received in the first sample container rack 11a is determined by the sorter device controller 14 in step 34.

Such first present number of sample containers 4 is compared in step 35 to the first threshold value by the sorter device controller 14. If the first present number of sample containers 4 is equal or greater than the first threshold value, a first warning data is output through the user interface 15 by outputting at least one of audio data and video data (step 35). The first warning data will inform the operator of the IVD laboratory system 1 about the present number of sample containers 4 received in the first sample container rack 11a having reached the threshold value. This provides an indication to the operator about the first sample container rack 11a filing up with sample containers 4. In response, the operator can take necessary measures for avoiding complete filling of the first sample container rack 11a which may cause interruption of the operation of the IVD laboratory system 1. For example, the operator may assign another sample container rack to the same sub-target to which the first sample container rack 11a is assigned, thereby, providing additional storage capacity for sample containers 4 if the first sample container rack 11a is completely filled up. Interruption of the operation of the sorter device 5 and the IVD laboratory system 1 is avoided.

The method described before for the first sample container rack 11a can be applied to one or more additional sample container racks from the plurality of sample container racks 11a, 11b on the tray 10.

The threshold value assigned to one of the sample container racks 11a, 11b may be updated or amended during operation of the sorter device 5 in dependence on some operation characteristic determined for the IVD laboratory system 1. For example, if it is determined that the IVD laboratory system 1 is switched from a first mode of operation to a second mode of operation, in response updating of the first threshold value by an amended first threshold value may be performed. The first and second mode of operation, for example, may refer to the IVD laboratory system 1 performing different workflow design.

## Claims

1. A method for operating a sorter device (5) in an IVD laboratory system, comprising:
- providing a sorter device (5) in an IVD laboratory system (1) provided with a system operation controller (3), the sorter device (5) having
- a plurality of sample container racks (11a, 11b) each provided with reception holes (12) for receiving sample containers (4),
- a handling device configured to pick sample containers (4) from and place sample containers (4) in the reception holes (12) of the sample container racks (11a, 11b),
- a sorter device controller (14) configured to control operation of the sorter device (5) and connectable to the system operation controller (3), and
- an output device (15) functionally connected to the sorter device controller (14) and configured to output at least one of audio data and video data;
- configuring the sorter device (5) in a pre-operation process, comprising
- assigning the plurality of sample container racks (11a, 11b) to a plurality of processing sub-targets conducted by the IVD laboratory system (1) in operation, wherein a first sample container rack (11a) is assigned to a first processing sub-target and a second sample container rack (11b) is assigned to a second processing sub-target which is different from the first processing sub-target, and
- assigning to the first sample container rack (11a) a first threshold value indicative of a first threshold number of sample containers (4) in the first sample container rack (11a), wherein the first threshold number of sample containers (4) is smaller than a maximum number of sample containers (4) receivable in the first sample container rack (11a); and
- operating the sorter device (5) in an operation process, comprising
- placing sample containers (4) in the reception holes (12) of the first sample container rack (11a) by the handling device (13),
- determining a first present number of sample containers (4) received in the first sample container rack (11a) by the sorter device controller (14),
- comparing the first present number of sample containers (4) to the first threshold value by the sorter device controller (14), and
- if the first present number of sample containers (4) is equal to or greater than the first threshold value, updating the first threshold number of sample containers (4), wherein updating the first threshold number of sample containers (4) comprises decreasing the first threshold number of sample containers (4) by a predefined amount if an operation parameter exceeds an average value by a predefined amount, wherein the operation parameter is indicative of a sample container throughput, and wherein a first warning data is output through the output device (15) if the first present number of sample containers (4) is equal to or greater than the first threshold value.

2. Method of claim 1, further comprising assigning to the second sample container rack a second threshold value indicative of a second threshold number of sample containers (4) in the second sample container rack (11b), wherein
- the second threshold number of sample containers (4) is smaller than a maximum number of sample containers (4) receivable in the second sample container rack (11b),
- the second threshold value is different from the first threshold value, and
- the operating of the sorter device (5) in the operation process further comprises
- placing sample containers (4) in the reception holes (12) of the second sample container rack (11b) by the handling device,
- determining a second present number of sample containers (4) received in the second sample container rack (11b) by the sorter device controller (14),
- comparing the second present number of sample containers (4) to the second threshold value by the sorter device controller (14), and
- if the second present number of sample containers (4) is equal to or greater than the second threshold value, outputting a second warning data through the output device.

3. Method of claim 1 or 2, wherein at least one of the following is provided:
- assigning the plurality of sample container racks (11a, 11b) to the plurality of processing sub-targets in response to rack assignment user input received in at least one of the sorter device controller (14) and the system operation controller (3) of the IVD laboratory system (1); and
- assigning to the first sample container rack (11a) the first threshold value in response to first threshold value user input received in at least one of the sorter device controller (14) and the system operation controller (3) of the IVD laboratory system (1).

4. Method of at least one of the preceding claims, wherein, in the operation process,
- the first threshold value is updated by an amended first threshold value indicative of an amended first threshold number of sample containers (4), the amended first threshold value being different from the first threshold value;
- comparing the first present number of sample containers (4) to the amended first threshold value by the sorter device controller (14); and
- if the first present number of sample containers (4) is equal to or greater than the amended first threshold value, outputting the first warning data through the output device.

5. Method of claim 4, further comprising, in the operation process,
- determining the operation parameter indicative of at least one of a present operation characteristic of the sorter device (5) and a present operation characteristic of the IVD laboratory system (1) such as a present operation characteristic of an IVD device provided in the IVD laboratory system (1); and
- determining the amended first threshold value in dependence on the operation parameter,
wherein the operation parameter is indicative of at least one operation characteristic selected from the following:
- sample container throughput of the sorter device (5),
- sample container throughput of the IVD laboratory system (1),
- sample container throughput of at least one IVD instrument (2),
- sample container throughput of the first processing sub-target, and
- sample container throughput of the handling device (13).

6. Method of at least one of the claims 4 to 5, wherein the first threshold value is updated in response to the outputting of the first warning data through the output device.

7. Method of at least one of the claims 4 to 6, further comprising, in the operation process,
- assigning to the first sample container rack (11a) an amended first processing sub-target which is different from the first updated processing sub-target; and
- updating the first threshold value in response to the assignment of the amended first processing sub-target to the first sample container rack (11a).

8. Method of at least one of the preceding claims, further comprising, in the pre-operation process,
- generating sorter device configuration data indicative of the assignment of the plurality of sample container racks (11a, 11b) to the plurality of processing sub-targets, and the assignment of the first threshold value to the first sample container rack (11a);
- storing the sorter device configuration data in a storage device assigned to the IVD laboratory system (1);
- retrieving the sorter device configuration data from storage device;
- providing the sorter device configuration data to the sorter device (5); and
- configuring the sorter device according to the sorter device configuration data.

9. Method of claim 8, wherein the sorter device (5) configuration data are retrieved from the storage device in response to receiving a starting request for starting operation of the sorter device (5) in at least one of the system operation controller (3) and the sorter device controller (14).

10. Method of at least one of the preceding claims, wherein the configuring of the sorter device (5) in the pre-operation process at least in part is performed by a sorter device (5) layout module functionally connectable to at least one of the system operation controller (3) and the sorter device controller (14).

11. Method of claim 10, wherein the sorter device layout module is provided as a sub-module of the system operation controller (3).

12. Method of at least one of the preceding claims, further comprising assigning the first threshold value to a subset of the reception holes (12) of the first sample container rack (11a), wherein
- the first threshold value is indicative of a first threshold number of sample containers (4) in the first sample container rack (11a), and
- the first threshold number of sample containers (4) is smaller than a maximum number of sample containers (4) receivable in the subset of reception holes (12) of the first sample container rack (11a)

13. Method of at least one of the preceding claims, further comprising providing the plurality of sample container racks (11a, 11b) disposed on a plurality of trays (10) each configured to receive one or more sample container racks (11a, 11b) from the plurality of sample container racks (11a, 11b).

14. An IVD laboratory system (1), comprising:
- a system operation controller (3); and
- a sorter device (5), having
- a plurality of sample container racks (11a, 11b) each provided with reception holes (12) for receiving sample containers (4),
- a handling device configured to pick sample containers (4) from and place sample containers (4) in the reception holes (12) of the sample container racks (11a, 11b),
- a sorter device controller (14) configured to control operation of the sorter device (5) and connectable to the system operation controller (3), and
- an output device (15) functionally connected to the sorter device controller (14) and configured to output at least one of audio data and video data;
wherein the IVD laboratory system (1) is configured for operation of the sorter device (5) as follows:
- configuring the sorter device (5) in a pre-operation process, comprising
- assigning the plurality of sample container racks (11a, 11b) to a plurality of processing sub-targets conducted by the IVD laboratory system (1) in operation, wherein a first sample container rack (11a) is assigned to a first processing sub-target and a second sample container rack (11b) is assigned to a second processing sub-target which is different from the first processing sub-target, and
- assigning to the first sample container rack (11a) a first threshold value indicative of a first threshold number of sample containers (4) in the first sample container rack (11a), wherein the first threshold number of sample containers (4) is smaller than a maximum number of sample containers (4) receivable in the first sample container rack (11a); and
- operating the sorter device (5) in an operation process, comprising
- placing sample containers (4) in the reception holes (12) of the first sample container rack (11a) by the handling device (13),
- determining a first present number of sample containers (4) received in the first sample container rack (11a) by the sorter device controller (14),
- comparing the first present number of sample containers (4) to the first threshold value by the sorter device controller (14), and
- if the first present number of sample containers (4) is equal to or greater than the first threshold value, updating the first threshold number of sample containers (4), wherein updating the first threshold number of sample containers (4) comprises decreasing the first threshold number of sample containers (4) by a predefined amount if an operation parameter exceeds an average value by a predefined amount, wherein the operation parameter is indicative of a sample container throughput, and wherein a first warning data is output through the output device (15) if the first present number of sample containers (4) is equal to or greater than the first threshold value.

## Patentansprüche

1. Verfahren zum Betreiben einer Sortiervorrichtung (5) in einem IVD-Laborsystem, umfassend:
- Bereitstellen einer Sortiervorrichtung (5) in einem IVD-Laborsystem (1), das mit einer Systembetriebssteuerung (3) versehen ist, wobei die Sortiervorrichtung (5) Folgendes aufweist:
- eine Vielzahl von Probenbehältergestellen (11a, 11b), die jeweils mit Aufnahmelöchern (12) zum Aufnehmen von Probenbehältern (4) versehen sind,
- eine Handhabungsvorrichtung, die eingerichtet ist, Probenbehälter (4) aus den Aufnahmelöchern (12) der Probenbehältergestelle (11a, 11b) aufzunehmen und Probenbehälter (4) in diesen zu platzieren,
- eine Sortiervorrichtungssteuerung (14), die eingerichtet ist, den Betrieb der Sortiervorrichtung (5) zu steuern, und die mit der Systembetriebssteuerung (3) verbindbar ist, und
- eine Ausgabevorrichtung (15), die funktional mit der Sortiervorrichtungssteuerung (14) verbunden ist und eingerichtet ist, Audiodaten und/oder Videodaten auszugeben;
- Einrichten der Sortiervorrichtung (5) in einem Vorbetriebsprozess, umfassend
- Zuordnen der Vielzahl von Probenbehältergestellen (11a, 11b) zu einer Vielzahl von Verarbeitungsunterzielen, die von dem IVD-Laborsystem (1) im Betrieb durchgeführt werden, wobei ein erstes Probenbehältergestell (11a) einem ersten Verarbeitungsunterziel zugeordnet ist und ein zweites Probenbehältergestell (11b) einem zweiten Verarbeitungsunterziel zugeordnet ist, das sich von dem ersten Verarbeitungsunterziel unterscheidet, und
- Zuordnen eines ersten Schwellenwerts, der eine erste Schwellenanzahl von Probenbehältern (4) in dem ersten Probenbehältergestell (11a) angibt, zu dem ersten Probenbehältergestell (11a), wobei die erste Schwellenanzahl von Probenbehältern (4) kleiner als eine maximale Anzahl von Probenbehältern (4) ist, die in dem ersten Probenbehältergestell (11a) aufgenommen werden können; und
- Betreiben der Sortiervorrichtung (5) in einem Betriebsprozess, umfassend
- Platzieren von Probenbehältern (4) in den Aufnahmelöchern (12) des ersten Probenbehältergestells (11a) durch die Handhabungsvorrichtung (13),
- Bestimmen einer ersten gegenwärtigen Anzahl von Probenbehältern (4), die in dem ersten Probenbehältergestell (11a) aufgenommen werden, durch die Sortiervorrichtungssteuerung (14),
- Vergleichen der ersten gegenwärtigen Anzahl von Probenbehältern (4) mit dem ersten Schwellenwert durch die Sortiervorrichtungssteuerung (14) und
- wenn die erste gegenwärtige Anzahl von Probenbehältern (4) gleich oder größer als der erste Schwellenwert ist, Aktualisieren der ersten Schwellenanzahl von Probenbehältern (4), wobei das Aktualisieren der ersten Schwellenanzahl von Probenbehältern (4) ein Verringern der ersten Schwellenanzahl von Probenbehältern (4) um einen vordefinierten Betrag umfasst, wenn ein Betriebsparameter einen Durchschnittswert um einen vordefinierten Betrag überschreitet, wobei der Betriebsparameter einen Probenbehälterdurchsatz angibt und wobei erste Warndaten durch die Ausgabevorrichtung (15) ausgegeben werden, wenn die erste gegenwärtige Anzahl von Probenbehältern (4) gleich oder größer als der erste Schwellenwert ist.

2. Verfahren nach Anspruch 1, ferner umfassend das Zuordnen eines zweiten Schwellenwerts, der eine zweite Schwellenanzahl von Probenbehältern (4) in dem zweiten Probenbehältergestell (11b) angibt, zu dem zweiten Probenbehältergestell, wobei
- die zweite Schwellenanzahl von Probenbehältern (4) kleiner als eine maximale Anzahl von Probenbehältern (4) ist, die in dem zweiten Probenbehältergestell (11b) aufgenommen werden können,
- der zweite Schwellenwert sich von dem ersten Schwellenwert unterscheidet und
- das Betreiben der Sortiervorrichtung (5) in dem Betriebsprozess ferner Folgendes umfasst:
- Platzieren von Probenbehältern (4) in den Aufnahmelöchern (12) des zweiten Probenbehältergestells (11b) durch die Handhabungsvorrichtung,
- Bestimmen einer zweiten gegenwärtigen Anzahl von Probenbehältern (4), die in dem zweiten Probenbehältergestell (11b) aufgenommen werden, durch die Sortiervorrichtungssteuerung (14),
- Vergleichen der zweiten gegenwärtigen Anzahl von Probenbehältern (4) mit dem zweiten Schwellenwert durch die Sortiervorrichtungssteuerung (14) und
- wenn die zweite gegenwärtige Anzahl von Probenbehältern (4) gleich oder größer als der zweite Schwellenwert ist, Ausgeben von zweiten Warndaten durch die Ausgabevorrichtung.

3. Verfahren nach Anspruch 1 oder 2, wobei mindestens eines der Folgenden bereitgestellt wird:
- Zuordnen der Vielzahl von Probenbehältergestellen (11a, 11b) zu der Vielzahl von Verarbeitungsunterzielen als Reaktion auf eine Gestellzuordnungs-Benutzereingabe, die in der Sortiervorrichtungssteuerung (14) und/oder der Systembetriebssteuerung (3) des IVD-Laborsystems (1) empfangen wird; und
- Zuordnen des ersten Schwellenwerts zu dem ersten Probenbehältergestell (11a) als Reaktion auf eine erste Schwellenwertbenutzereingabe, die in der Sortiervorrichtungssteuerung (14) und/oder der Systembetriebssteuerung (3) des IVD-Laborsystems (1) empfangen wird.

4. Verfahren nach mindestens einem der vorhergehenden Ansprüche, wobei in dem Betriebsprozess
- der erste Schwellenwert durch einen geänderten ersten Schwellenwert aktualisiert wird, der eine geänderte erste Schwellenanzahl von Probenbehältern (4) angibt, wobei sich der geänderte erste Schwellenwert von dem ersten Schwellenwert unterscheidet;
- Vergleichen der ersten gegenwärtigen Anzahl von Probenbehältern (4) mit dem geänderten ersten Schwellenwert durch die Sortiervorrichtungssteuerung (14); und
- wenn die erste gegenwärtige Anzahl von Probenbehältern (4) gleich oder größer als der geänderte erste Schwellenwert ist, Ausgeben der ersten Warndaten durch die Ausgabevorrichtung.

5. Verfahren nach Anspruch 4, ferner umfassend, in dem Betriebsprozess,
- Bestimmen des Betriebsparameters, der mindestens eines von einer gegenwärtigen Betriebscharakteristik der Sortiervorrichtung (5) und einer gegenwärtigen Betriebscharakteristik des IVD-Laborsystems (1) angibt, wie etwa eine gegenwärtige Betriebscharakteristik einer IVD-Vorrichtung, die in dem IVD-Laborsystem (1) bereitgestellt ist; und
- Bestimmen des geänderten ersten Schwellenwertes in Abhängigkeit von dem Betriebsparameter,
wobei der Betriebsparameter mindestens eine Betriebscharakteristik angibt, die aus den Folgenden ausgewählt ist:
- Probenbehälterdurchsatz der Sortiervorrichtung (5),
- Probenbehälterdurchsatz des IVD-Laborsystems (1),
- Probenbehälterdurchsatz mindestens eines IVD-Instruments (2),
- Probenbehälterdurchsatz des ersten Verarbeitungsunterziels und
- Probenbehälterdurchsatz der Handhabungsvorrichtung (13).

6. Verfahren nach mindestens einem der Ansprüche 4 bis 5, wobei der erste Schwellenwert als Reaktion auf das Ausgeben der ersten Warndaten durch die Ausgabevorrichtung aktualisiert wird.

7. Verfahren nach mindestens einem der Ansprüche 4 bis 6, ferner umfassend, in dem Betriebsprozess,
- Zuordnen eines geänderten ersten Verarbeitungsunterziels, das sich von dem ersten aktualisierten Verarbeitungsunterziel unterscheidet, zu dem ersten Probenbehältergestell (11a); und
- Aktualisieren des ersten Schwellenwerts als Reaktion auf die Zuordnung des geänderten ersten Verarbeitungsunterziels zu dem ersten Probenbehältergestell (11a).

8. Verfahren nach mindestens einem der vorhergehenden Ansprüche, ferner umfassend, in dem Vorbetriebsprozess,
- Erzeugen von Einrichtungsdaten der Sortiervorrichtung, die die Zuordnung der Vielzahl von Probenbehältergestellen (11a, 11b) zu der Vielzahl von Verarbeitungsunterzielen und die Zuordnung des ersten Schwellenwerts zu dem ersten Probenbehältergestell (11a) angeben;
- Speichern der Einrichtungsdaten der Sortiervorrichtung in einer Speichervorrichtung, die dem IVD-Laborsystem (1) zugeordnet ist;
- Abrufen der Einrichtungsdaten der Sortiervorrichtung aus der Speichervorrichtung;
- Bereitstellen der Einrichtungsdaten der Sortiervorrichtung für die Sortiervorrichtung (5); und
- Einrichten der Sortiervorrichtung gemäß den Einrichtungsdaten der Sortiervorrichtung.

9. Verfahren nach Anspruch 8, wobei die Einrichtungsdaten der Sortiervorrichtung (5) aus der Speichervorrichtung als Reaktion auf das Empfangen einer Startanforderung zum Starten des Betriebs der Sortiervorrichtung (5) in der Systembetriebssteuerung (3) und/oder der Sortiervorrichtungssteuerung (14) abgerufen werden.

10. Verfahren nach mindestens einem der vorhergehenden Ansprüche, wobei das Einrichten der Sortiervorrichtung (5) in dem Vorbetriebsprozess mindestens teilweise durch ein Layoutmodul der Sortiervorrichtung (5) durchgeführt wird, das funktional mit der Systembetriebssteuerung (3) und/oder der Sortiervorrichtungssteuerung (14) verbunden werden kann.

11. Verfahren nach Anspruch 10, wobei das Layoutmodul der Sortiervorrichtung als ein Untermodul der Systembetriebssteuerung (3) bereitgestellt wird.

12. Verfahren nach mindestens einem der vorhergehenden Ansprüche, ferner umfassend das Zuordnen des ersten Schwellenwerts zu einer Teilmenge der Aufnahmelöcher (12) des ersten Probenbehältergestells (11a), wobei
- der erste Schwellenwert eine erste Schwellenanzahl von Probenbehältern (4) in dem ersten Probenbehältergestell (11a) angibt und
- die erste Schwellenanzahl von Probenbehältern (4) kleiner als eine maximale Anzahl von Probenbehältern (4) ist, die in der Teilmenge von Aufnahmelöchern (12) des ersten Probenbehältergestells (11a) aufgenommen werden können.

13. Verfahren nach mindestens einem der vorhergehenden Ansprüche, ferner umfassend das Bereitstellen der Vielzahl von Probenbehältergestellen (11a, 11b), die auf einer Vielzahl von Schalen (10) angeordnet sind, die jeweils eingerichtet sind, ein oder mehrere Probenbehältergestelle (11a, 11b) der Vielzahl von Probenbehältergestellen (11a, 11b) aufzunehmen.

14. IVD-Laborsystem (1), umfassend:
- eine Systembetriebssteuerung (3); und
- eine Sortiervorrichtung (5), die Folgendes aufweist:
- eine Vielzahl von Probenbehältergestellen (11a, 11b), die jeweils mit Aufnahmelöchern (12) zum Aufnehmen von Probenbehältern (4) versehen sind,
- eine Handhabungsvorrichtung, die eingerichtet ist, Probenbehälter (4) aus den Aufnahmelöchern (12) der Probenbehältergestelle (11a, 11b) aufzunehmen und Probenbehälter (4) in diesen zu platzieren,
- eine Sortiervorrichtungssteuerung (14), die eingerichtet ist, den Betrieb der Sortiervorrichtung (5) zu steuern, und die mit der Systembetriebssteuerung (3) verbunden werden kann, und
- eine Ausgabevorrichtung (15), die funktional mit der Sortiervorrichtungssteuerung (14) verbunden ist und eingerichtet ist, Audiodaten und/oder Videodaten auszugeben;
wobei das IVD-Laborsystem (1) für den Betrieb der Sortiervorrichtung (5) wie folgt eingerichtet ist:
- Einrichten der Sortiervorrichtung (5) in einem Vorbetriebsprozess, umfassend
- Zuordnen der Vielzahl von Probenbehältergestelle (11a, 11b) zu einer Vielzahl von Verarbeitungsunterzielen, die von dem IVD-Laborsystem (1) im Betrieb durchgeführt werden, wobei ein erstes Probenbehältergestell (11a) einem ersten Verarbeitungsunterziel zugeordnet ist und ein zweites Probenbehältergestell (11b) einem zweiten Verarbeitungsunterziel zugeordnet ist, das sich von dem ersten Verarbeitungsunterziel unterscheidet, und
- Zuordnen eines ersten Schwellenwerts, der eine erste Schwellenanzahl von Probenbehältern (4) in dem ersten Probenbehältergestell (11a) angibt, zu dem ersten Probenbehältergestell (11a), wobei die erste Schwellenanzahl von Probenbehältern (4) kleiner als eine maximale Anzahl von Probenbehältern (4) ist, die in dem ersten Probenbehältergestell (11a) aufgenommen werden können; und
- Betreiben der Sortiervorrichtung (5) in einem Betriebsprozess, umfassend
- Platzieren von Probenbehältern (4) in den Aufnahmelöchern (12) des ersten Probenbehältergestells (11a) durch die Handhabungsvorrichtung (13),
- Bestimmen einer ersten gegenwärtigen Anzahl von Probenbehältern (4), die in dem ersten Probenbehältergestell (11a) aufgenommen werden, durch die Sortiervorrichtungssteuerung (14),
- Vergleichen der ersten gegenwärtigen Anzahl von Probenbehältern (4) mit dem ersten Schwellenwert durch die Sortiervorrichtungssteuerung (14) und
- wenn die erste gegenwärtige Anzahl von Probenbehältern (4) gleich oder größer als der erste Schwellenwert ist, Aktualisieren der ersten Schwellenanzahl von Probenbehältern (4), wobei das Aktualisieren der ersten Schwellenanzahl von Probenbehältern (4) das Verringern der ersten Schwellenanzahl von Probenbehältern (4) um einen vordefinierten Betrag umfasst, wenn ein Betriebsparameter einen Durchschnittswert um einen vordefinierten Betrag überschreitet, wobei der Betriebsparameter einen Probenbehälterdurchsatz angibt und wobei erste Warndaten durch die Ausgabevorrichtung (15) ausgegeben werden, wenn die erste gegenwärtige Anzahl von Probenbehältern (4) gleich oder größer als der erste Schwellenwert ist.

## Revendications

1. Procédé de fonctionnement d'un dispositif trieur (5) dans un système de laboratoire IVD, comprenant :
- la fourniture d'un dispositif trieur (5) dans un système de laboratoire IVD (1) fourni avec un dispositif de commande de fonctionnement de système (3), le dispositif trieur (5) ayant
- une pluralité de portoirs de récipients d'échantillon (11a, 11b) chacun fourni avec des orifices de réception (12) pour recevoir des récipients d'échantillon (4),
- un dispositif de manipulation configuré pour attraper les récipients d'échantillon (4) à partir des et placer les récipients d'échantillon (4) dans les orifices de réception (12) des portoirs de récipients d'échantillon (11a, 11b),
- un dispositif de commande de dispositif trieur (14) configuré pour commander le fonctionnement du dispositif trieur (5) et pouvant être connecté au dispositif de commande de fonctionnement de système (3) et
- un dispositif de sortie (15) connecté de manière fonctionnelle au dispositif de commande de dispositif trieur (14) et configuré pour sortir au moins une parmi des données audio et des données vidéo ;
- la configuration du dispositif trieur (5) dans un processus de pré-fonctionnement, comprenant
- l'attribution de la pluralité de portoirs de récipients d'échantillons (11a, 11b) à une pluralité de sous-cibles de traitement réalisée par le système de laboratoire IVD (1) en fonctionnement, dans lequel un premier portoir de récipients d'échantillon (11a) est attribué à une première sous-cible de traitement et un deuxième portoir de récipients d'échantillon (11b) est attribué à une deuxième sous-cible de traitement qui est différente de la première sous-cible de traitement, et
- l'attribution au premier portoir de récipients d'échantillons (11a) d'une première valeur seuil indiquant un premier nombre seuil de récipients d'échantillon (4) dans le premier portoir de récipients d'échantillon (11a), dans lequel le premier nombre seuil de récipients d'échantillon (4) est inférieur à un nombre maximal de récipients d'échantillon (4) pouvant être reçus dans le premier portoir de récipients d'échantillon (11a) ; et
- le fonctionnement du dispositif trieur (5) dans un processus de fonctionnement, comprenant
- le placement de récipients d'échantillon (4) dans les orifices de réception (12) du premier portoir de récipients d'échantillon (11a) par le dispositif de manipulation (13),
- la détermination d'un premier nombre présent de récipients d'échantillon (4) reçus dans le premier portoir de récipients d'échantillon (11a) par le dispositif de commande de dispositif trieur (14),
- la comparaison du premier nombre présent de récipients d'échantillon (4) à la première valeur seuil par le dispositif de commande de dispositif trieur (14) et
- si le premier nombre présent de récipients d'échantillon (4) est supérieur ou égal à la première valeur seuil, la mise à jour du premier nombre seuil de récipients d'échantillon (4), dans lequel la mise à jour du premier nombre seuil de récipients d'échantillon (4) comprend la diminution du premier nombre seuil de récipients d'échantillon (4) d'une quantité prédéfinie si un paramètre de fonctionnement dépasse une valeur moyenne d'une quantité prédéfinie, dans lequel le paramètre de fonctionnement indique une cadence de récipients d'échantillon, et dans lequel des premières données d'avertissement sont sorties au moyen du dispositif de sortie (15) si le premier nombre présent de récipients d'échantillon (4) est supérieur ou égal à la première valeur seuil.

2. Procédé selon la revendication 1, comprenant en outre l'attribution au deuxième portoir de récipients d'échantillon d'une deuxième valeur seuil indiquant un deuxième nombre seuil de récipients d'échantillon (4) dans le deuxième portoir de récipients d'échantillon (11b), dans lequel
- le deuxième nombre seuil de récipients d'échantillon (4) est inférieur à un nombre maximal de récipients d'échantillon (4) pouvant être reçus dans le deuxième portoir de récipients d'échantillon (11b),
- la deuxième valeur seuil est différente de la première valeur seuil, et
- le fonctionnement du dispositif trieur (5) dans le processus de fonctionnement comprend en outre
- le placement de récipients d'échantillon (4) dans les orifices de réception (12) du deuxième portoir de récipients d'échantillon (11b) par le dispositif de manipulation,
- la détermination d'un deuxième nombre présent de récipients d'échantillon (4) reçus dans le deuxième portoir de récipients d'échantillon (11b) par le dispositif de commande de dispositif trieur (14),
- la comparaison du deuxième nombre présent de récipients d'échantillon (4) à la deuxième valeur seuil par le dispositif de commande de dispositif trieur (14), et
- si le deuxième nombre présent de récipients d'échantillon (4) est supérieur ou égal à la deuxième valeur seuil, la sortie de deuxièmes données d'avertissement au moyen du dispositif de sortie.

3. Procédé selon la revendication 1 ou 2, dans lequel au moins l'une des suivantes est fournie :
- l'attribution de la pluralité de portoirs de récipients d'échantillon (11a, 11b) à la pluralité de sous-cibles de traitement en réponse à une entrée utilisateur d'attribution de portoirs reçue dans au moins un parmi le dispositif de commande de dispositif trieur (14) et le dispositif de commande de fonctionnement de système (3) du système de laboratoire IVD (1) ; et
- l'attribution au premier portoir de récipients d'échantillon (11a) de la première valeur seuil en réponse à l'entrée utilisateur de première valeur seuil reçue dans au moins un parmi le dispositif de commande de dispositif trieur (14) et le dispositif de commande de fonctionnement de système (3) du système de laboratoire IVD (1).

4. Procédé selon au moins l'une des revendications précédentes, dans lequel, dans le processus de fonctionnement,
- la première valeur seuil est mise à jour par une première valeur seuil modifiée indiquant un premier nombre seuil modifié de récipients d'échantillon (4), la première valeur seuil modifiée étant différente de la première valeur seuil ;
- la comparaison du premier nombre présent de récipients d'échantillon (4) à la première valeur seuil modifiée par le dispositif de commande de dispositif trieur (14) ; et
- si le premier nombre présent de récipients d'échantillon (4) est supérieur ou égal à la première valeur seuil modifiée, la sortie des premières données d'avertissement au moyen du dispositif de sortie.

5. Procédé selon la revendication 4, comprenant en outre, dans le processus de fonctionnement,
- la détermination du paramètre de fonctionnement indiquant au moins une parmi une caractéristique de fonctionnement présente du dispositif trieur (5) et une caractéristique de fonctionnement présente du système de laboratoire IVD (1) telle qu'une caractéristique de fonctionnement présente d'un dispositif IVD fourni dans le système de laboratoire IVD (1) ; et
- la détermination de la première valeur seuil modifiée en fonction du paramètre de fonctionnement,
dans lequel le paramètre de fonctionnement indique au moins une caractéristique de fonctionnement choisie parmi les suivantes :
- cadence de récipients d'échantillon du dispositif trieur (5),
- cadence de récipients d'échantillon du système de laboratoire IVD (1),
- cadence de récipients d'échantillon d'au moins un instrument IVD (2),
- cadence de récipients d'échantillon de la première sous-cible de traitement, et
- cadence de récipients d'échantillon du dispositif de manipulation (13).

6. Procédé selon au moins l'une des revendications 4 à 5, dans lequel la première valeur seuil est mise à jour en réponse à la sortie des premières données d'avertissement au moyen du dispositif de sortie.

7. Procédé selon au moins l'une des revendications 4 à 6, comprenant en outre, dans le processus de fonctionnement,
- l'attribution au premier portoir de récipients d'échantillon (11a) d'une première sous-cible de traitement modifiée qui est différente de la première sous-cible de traitement mise à jour ; et
- la mise à jour de la première valeur seuil en réponse à l'attribution de la première sous-cible de traitement modifiée au premier portoir de récipients d'échantillon (11a).

8. Procédé selon au moins l'une des revendications précédentes, comprenant en outre, dans le processus de pré-fonctionnement,
- la génération de données de configuration de dispositif trieur indiquant l'attribution de la pluralité de portoirs de récipients d'échantillon (11a, 11b) à la pluralité de sous-cibles de traitement, et l'attribution de la première valeur seuil au premier portoir de récipients d'échantillon (11a) ;
- le stockage des données de configuration de dispositif trieur dans un dispositif de stockage attribué au système de laboratoire IVD (1) ;
- la récupération des données de configuration de dispositif trieur du dispositif de stockage ;
- la fourniture des données de configuration de dispositif trieur au dispositif trieur (5) ; et
- la configuration du dispositif trieur conformément aux données de configuration du dispositif trieur.

9. Procédé selon la revendication 8, dans lequel les données de configuration du dispositif trieur (5) sont récupérées du dispositif de stockage en réponse à la réception d'une requête de démarrage pour démarrer le fonctionnement du dispositif trieur (5) dans au moins un parmi le dispositif de commande de fonctionnement de système (3) et le dispositif de commande de dispositif trieur (14).

10. Procédé selon au moins l'une des revendications précédentes, dans lequel la configuration du dispositif trieur (5) dans le processus de pré-fonctionnement est réalisée au moins en partie par un module d'agencement de dispositif trieur (5) pouvant être connecté de manière fonctionnelle à au moins un parmi le dispositif de commande de fonctionnement de système (3) et le dispositif de commande de dispositif trieur (14).

11. Procédé selon la revendication 10, dans lequel le module d'agencement de dispositif trieur est fourni en tant que sous-module du dispositif de commande de fonctionnement de système (3).

12. Procédé selon au moins l'une des revendications précédentes, comprenant en outre l'attribution de la première valeur seuil à un sous-ensemble des orifices de réception (12) du premier portoir de récipients d'échantillon (11a), dans lequel
- la première valeur seuil indique un premier nombre seuil de récipients d'échantillon (4) dans le premier portoir de récipients d'échantillon (11a), et
- le premier nombre seuil de récipients d'échantillon (4) est inférieur à un nombre maximal de récipients d'échantillon (4) pouvant être reçus dans le sous-ensemble d'orifices de réception (12) du premier portoir de récipients d'échantillon (11a).

13. Procédé selon au moins l'une des revendications précédentes, comprenant en outre la fourniture de la pluralité de portoirs de récipients d'échantillon (11a, 11b) disposés sur une pluralité de plateaux (10) chacun configuré pour recevoir un ou plusieurs portoirs de récipients d'échantillon (11a, 11b) à partir de la pluralité de portoirs de récipients d'échantillon (11a, 11b).

14. Système de laboratoire IVD (1), comprenant :
- un dispositif de commande de fonctionnement de système (3) ; et
- un dispositif trieur (5), ayant
- une pluralité de portoirs de récipients d'échantillon (11a, 11b) chacun fourni avec des orifices de réception (12) pour recevoir des récipients d'échantillon (4),
- un dispositif de manipulation configuré pour attraper les récipients d'échantillon (4) à partir des et placer les récipients d'échantillon (4) dans les orifices de réception (12) des portoirs de récipients d'échantillon (11a, 11b),
- un dispositif de commande de dispositif trieur (14) configuré pour commander le fonctionnement du dispositif trieur (5) et pouvant être connecté au dispositif de commande de fonctionnement de système (3) et
- un dispositif de sortie (15) connecté de manière fonctionnelle au dispositif de commande de dispositif trieur (14) et configuré pour sortir au moins une parmi des données audio et des données vidéo ;
dans lequel le système de laboratoire IVD (1) est configuré pour le fonctionnement du dispositif trieur (5) de la manière suivante :
- la configuration du dispositif trieur (5) dans un processus de pré-fonctionnement, comprenant
- l'attribution de la pluralité de portoirs de récipients d'échantillons (11a, 11b) à une pluralité de sous-cibles de traitement réalisée par le système de laboratoire IVD (1) en fonctionnement, dans lequel un premier portoir de récipients d'échantillon (11a) est attribué à une première sous-cible de traitement et un deuxième portoir de récipients d'échantillon (11b) est attribué à une deuxième sous-cible de traitement qui est différente de la première sous-cible de traitement, et
- l'attribution au premier portoir de récipients d'échantillons (11a) d'une première valeur seuil indiquant un premier nombre seuil de récipients d'échantillon (4) dans le premier portoir de récipients d'échantillon (11a), dans lequel le premier nombre seuil de récipients d'échantillon (4) est inférieur à un nombre maximal de récipients d'échantillon (4) pouvant être reçus dans le premier portoir de récipients d'échantillon (11a) ; et
- le fonctionnement du dispositif trieur (5) dans un processus de fonctionnement, comprenant
- le placement de récipients d'échantillon (4) dans les orifices de réception (12) du premier portoir de récipients d'échantillon (11a) par le dispositif de manipulation (13),
- la détermination d'un premier nombre présent de récipients d'échantillon (4) reçus dans le premier portoir de récipients d'échantillon (11a) par le dispositif de commande de dispositif trieur (14),
- la comparaison du premier nombre présent de récipients d'échantillon (4) à la première valeur seuil par le dispositif de commande de dispositif trieur (14) et
- si le premier nombre présent de récipients d'échantillon (4) est supérieur ou égal à la première valeur seuil, la mise à jour du premier nombre seuil de récipients d'échantillon (4), dans lequel la mise à jour du premier nombre seuil de récipients d'échantillon (4) comprend la diminution du premier nombre seuil de récipients d'échantillon (4) d'une quantité prédéfinie si un paramètre de fonctionnement dépasse une valeur moyenne d'une quantité prédéfinie, dans lequel le paramètre de fonctionnement indique une cadence de récipients d'échantillon, et dans lequel des premières données d'avertissement sont sorties au moyen du dispositif de sortie (15) si le premier nombre présent de récipients d'échantillon (4) est supérieur ou égal à la première valeur seuil.
